# EUROPÄISCHE PATENTANMELDUNG

(11) **EP 4 764 360 A2**
(43) Veröffentlichungstag der Anmeldung: **24.06.2026**
(21) Anmeldenummer: 25223838.1
(22) Anmeldetag: 16.12.2025
(51) Int. Cl.: F25B 41/26, F16K 27/02, F25B 41/40

(54) **BAUGRUPPE FÜR EINEN KREISLAUF, SYSTEM UND WÄRMEPUMPE**

(30) Priorität: 18.12.2024 DE 102024138632
(71) Anmelder: Stiebel Eltron GmbH & Co. KG, 37603 Holzminden (DE)
(72) Erfinder: Schröder, Nikolas, 32839 Steinheim (DE); Dreyer, Jens, 37632 Eschershausen (DE); Schulze, Hendrik, 37586 Dassel (DE)

(57) **Zusammenfassung**

Eine Baugruppe (100, 100') für einen Kreislauf (KL) mit einem gasförmigen oder flüssigen Medium, vorzugsweise zur Verwendung in einer Wärmepumpe, wobei die Baugruppe (100, 100') dafür eingerichtet ist, mehrere zueinander benachbarte Komponenten zu umfassen, umfasst ein Gehäuse (110) mit mindestens einem Ablauf (180) und mindestens einem Zulauf (190). Das Gehäuse (110) umfasst mindestens einen auf dem Gehäuse (110) angeordneten Anschluss (150, 160, 170). Die Baugruppe (100, 100') ist mit einem Hochdrucksensor (152) und/oder einem Hochdruckschalter (162) und/oder einem Füllventil (172) über jeweils einen Anschluss (150, 160, 170) verbindbar.

## Beschreibung

Die Erfindung betrifft eine Baugruppe für den Bereich der Heizungs-, Lüftungs- und Klimatechnik, insbesondere für Kältekreise von Heizungsanlagen wie beispielsweise Wärmepumpen. Ferner betrifft die Erfindung ein System bestehend aus einer Baugruppe und einem Umschaltventil. Darüber hinaus betrifft die Erfindung einen Schwingungsdämpfer für eine Baugruppe.

Ein Kältekreislauf besteht grundsätzlich aus vier Hauptkomponenten: Verdampfer, Verdichter, Verflüssiger und Expansionsventil. Im Verdampfer nimmt ein Kältemittel Wärme aus der Umgebung auf und verdampft. Der Verdichter erhöht den Druck und die Temperatur des gasförmigen Kältemittels, bevor es in den Verflüssiger gelangt. Im Verflüssiger gibt das Kältemittel die aufgenommene Wärme an das Heizsystem ab und wird wieder flüssig. Das Expansionsventil reduziert den Druck des Kältemittels, wodurch es abkühlt und in den Verdampfer zurückgeführt wird, um den Kreislauf erneut zu durchlaufen. Dieser Prozess ermöglicht die Übertragung von Wärme von einer Wärmequelle zu einem Ziel. Solche Kältekreise finden unter anderem in Wärmepumpen Anwendung, um die in der Umgebung eines zu beheizenden Objektes verfügbare Wärme zur Beheizung des Objekts nutzbar zu machen.

Heizungsanlagen, wie beispielsweise Wärmepumpen, werden verwendet, um die Wärme von einer Quelle (Brennkammer, Luft, Wasser oder Erdreich) an ein Ziel zum Zwecke des Heizens oder des Kühlens, beispielsweise von Gebäuden, zu übertragen. Wärmepumpen insbesondere funktionieren ähnlich wie Kühlschränke durch thermodynamische Kreisläufe, bei denen das Kältemittel über Verdampfer, Verdichter, Verflüssiger und Expansionsventil geleitet wird. Es gibt verschiedene Typen, darunter Luft-Wasser-, Wasser-Wasser- und Erdwärmepumpen. Die Effizienz einer Wärmepumpe wird durch den COP (Coefficient of Performance) gemessen, wobei ein höherer COP auf größere Effizienz hinweist. Wärmepumpen sind umweltfreundlich, da sie erneuerbare Energiequellen nutzen können und weniger CO₂ emittieren, was sie zu einer nachhaltigen Alternative zu herkömmlichen Heizsystemen macht.

Wärmepumpen verfügen im Allgemeinen über ein oder mehrere Rückschlagventile oder auch Einwegventile genannt. Einwegventile sorgen dafür, dass ein unerwünschter Rückfluss des Kältemittels in der Anlage verhindert wird. Damit stellt das Einwegventil sicher, dass das Kältemittel nur in eine Richtung vom Verdampfer zum Verdichter fließt. Dies ist erforderlich für den Fall, dass die Wärmepumpe ausgeschaltet ist oder stillsteht. Eine falsche Fließrichtung stört den Betrieb der Wärmepumpe und verringert ihre Effizienz.

Einwegventile werden in Heizungsanlagen überall dort eingebaut, wo ein Rückfluss des Wärmeträgers verhindert werden soll. Hinter Umwälzpumpen stellen sie sicher, dass das Heizungswasser nur in Richtung der Heizflächen, des Pufferspeichers oder Warmwasserspeichers gelangt und nicht zurück zum Kessel, wenn die Pumpe nicht in Betrieb ist. Darüber hinaus sorgen Einwegventile zwischen unterschiedlichen Heizkreisen dafür, dass es nicht zu einer Durchmischung der Heizkreise mit unterschiedlichen Temperaturen kommt. Ein Einwegventil vor dem Warmwasserspeicher kann eine unerwünschte Aufheizung oder Abkühlung des Speichers vermeiden. Beispielsweise am Kaltwasseranschluss eines Trinkwasserspeichers verhindert das Einwegventil einen Rückfluss des erwärmten Wassers in die Kaltwasserleitung.

Weitere Einsatzorte hängen von der jeweiligen Konfiguration der Wärmepumpe ab. Ein Rückfluss des Kältemittels kann zu unerwünschten Druckverlusten in den verschiedenen Bauteilen einer Wärmepumpe führen. Dies würde die Leistung der Anlage insgesamt negativ beeinträchtigen.

Ein Nachteil von bekannten Wärmepumpen ist, dass diese für einen effizienten Betrieb eine gewisse Mindestgröße aufweisen müssen. So haben beispielsweise Wärmesenken von Wärmepumpen für eine ausreichende Wärmeaufnahme eine nicht unerhebliche Mindestgröße, um genügend Wärme aus der Umgebung aufnehmen zu können. Dies führt zu vergleichsweise großen Erdsonden, Luftwärmetauschern oder dergleichen. Darüber hinaus kann sich eine Wärmepumpe über weite räumliche Bereiche erstrecken, da Wärmesenken der Wärmepumpe vorzugsweise außerhalb der zu heizenden Objekte, wie beispielsweise Gebäuden oder Fahrzeugen, angebracht werden, während Wärmequellen, wie Heizkörper oder dergleichen, innerhalb der zu beheizenden Objekte verbaut sind. Die hieraus resultierende Größe von Wärmepumpen mit langen Flussleitungen, durch die der Wärmekreislauf fließt, führt einerseits zu steigenden Kosten durch die Größe, sowie erweiterten Aufwand beim Einbau und der Wartung der Wärmepumpe. Insbesondere wenn Komponenten der Wärmepumpe über weite Bereiche verteilt und durch Rohrstücke, T-Stücke und Aushalsungen miteinander verbunden sind, erhöht dies die Herstellungs- und Wartungskosten. Außerdem führt dies auch zu einer verringerten Effizienz der Wärmepumpe insgesamt durch Wärmeverluste über die groß dimensionierten Flussleitungen. Darüber hinaus nehmen die einzelnen Komponenten viel Raum ein, wodurch einerseits Anforderungen an die Mindestgröße von Umgebungen für die einzubauende Wärmepumpe entstehen und andererseits eine Vielzahl von Einzelteilen und Lötverbindungen notwendig ist, um die Komponenten miteinander zu verbinden.

Es ist folglich zugrundeliegendes ein Ziel der vorliegenden Erfindung die Kosten von Wärmepumpen zu reduzieren. Es ist auch ein Ziel der vorliegenden Erfindung die Wartbarkeit von Wärmepumpen zu verbessern. Darüber hinaus ist es ein zugrundeliegendes Ziel der vorliegenden Erfindung die Effizienz von Wärmepumpen zu verbessern. Außerdem ist es ein Ziel der vorliegenden Erfindung die Größe von Wärmepumpen zu verkleinern.

Die genannten Problemstellungen werden durch die erfindungsgemäßen Aspekte gelöst.

Erfindungsgemäß wird nach einem ersten Aspekt eine Baugruppe für einen Kreislauf mit einem gasförmigen oder flüssigen Medium vorgeschlagen, vorzugsweise zur Verwendung in einer Wärmepumpe, wobei die Baugruppe dafür eingerichtet ist, mehrere zueinander benachbarte Komponenten zu umfassen, wobei die Baugruppe ein Gehäuse mit mindestens einem Ablauf und mindestens einem Zulauf umfasst, wobei das Gehäuse mindestens einen auf dem Gehäuse angeordneten Anschluss umfasst, wobei die Baugruppe mit einem Hochdrucksensor und/oder einem Hochdruckschalter und/oder einem Füllventil über jeweils einen Anschluss verbindbar ist. Als Baugruppe wird, u.a., ein aus mehreren Einzelbauteilen bestehendes Werkstück bezeichnet. Oft bestehen Baugruppen aus Komponenten, die in verschiedenen Bearbeitungsverfahren hergestellt und dann zusammengebaut werden.

In einer weiteren Ausführungsform umfasst die Baugruppe mindestens ein Einwegventil, das innerhalb des Gehäuses angeordnet ist, wobei das mindestens eine Einwegventil eine Durchgangsrichtung für das Medium in einer Richtung, zu dem mindestens einen Ablauf hin, und eine Sperrrichtung für das Medium in der entgegengesetzten Richtung, zu dem mindestens einen Zulauf hin, umfasst.

Bei einer Ausführungsform der Baugruppe umfasst das Gehäuse einen primären Bereich und einen sekundären Bereich, wobei der primäre Bereich sich von einer Mitte des Gehäuses in eine erste Richtung erstreckt und wobei der sekundäre Bereich sich von der Mitte des Gehäuses in eine zweite Richtung erstreckt, wobei der sekundäre Bereich des Gehäuses mit einem Hochdrucksensor, einem Hochdruckschalter und einem Füllventil verbunden ist. Hochdrucksensor, Hochdruckschalter und Füllventil stellen Komponenten der Baugruppe dar. Sie sind vorzugsweise in unmittelbarer Nähe zu der Baugruppe angeordnet. Die Bündelung von Mess- und Steuerinstrumente an der Baugruppe erhöht die Wartbarkeit, da die Baugruppe in einem Stück tauschbar ist. Weiter sind Hochdrucksensor, Hochdruckschalter und Füllventil nah gebündelt und nicht über weite Bereiche verteilt, sodass bei möglichen Problemen im System zumindest hier die Fehlersuche vereinfacht wird.

Bei einer weiteren Ausführungsform der Baugruppe ist der Hochdrucksensor zu dem Füllventil mit einem Winkelabstand alpha beabstandet und der Hochdruckschalter von dem Füllventil mit dem Winkelabstand alpha beabstandet, wobei der Winkelabstand alpha 90° oder 120° ist. Die gleichmäßige Beabstandung hat den Vorteil, dass die Komponenten kompakt um die Baugruppe angeordnet sind. Der Winkelabstand kann auch weniger als 90°, sowie zwischen 90° und 120° betragen. Darüber hinaus kann der Winkelabstand zwischen dem Hochdrucksensor und dem Füllventil ein anderer sein, als zwischen dem Hochdruckschalter und dem Füllventil.

Bei einer weiteren Ausführungsform der Baugruppe umfasst das mindestens eine Einwegventil eine Ventilplatte, eine Hubbegrenzung und einen Magneten, wobei der Magnet an der Ventilplatte des mindestens einen Einwegventils angeordnet ist und die Ventilplatte in Richtung der Hubbegrenzung drückt, sodass das Einwegventil geschlossen ist, wenn die Ventilplatte gegen die Hubbegrenzung gedrückt ist, und wobei das Einwegventil geöffnet ist, wenn die Ventilplatte nicht gegen die Hubbegrenzung gedrückt ist.

In einer weiteren Ausführungsform der Baugruppe umfasst das mindestens eine Einwegventil einen Sieb, welches innerhalb des mindestens einen Einwegventils angeordnet ist. Vorteilhafterweise werden größere Stoffe oder Feststoffe durch das Sieb aus dem Kreislauf gefiltert. Somit wird die Baugruppe von Verstopfungen freigehalten. Vorzugsweise ist das Sieb innerhalb des sekundären Bereichs des Gehäuses angeordnet, da die Flussrichtung vorzugsweise vom sekundären Bereich in den primären Bereich ist.

Bei einer weiteren Ausführungsform der Baugruppe umfasst das mindestens eine Einwegventil mindestens eine Einstecktiefenbegrenzung. Die Einstecktiefenbegrenzung erleichtert den Anschluss der Baugruppe an Flussleitungen. So sind vorzugsweise zwei Einstecktiefenbegrenzungen vorgesehen, jeweils eine Einstecktiefenbegrenzung am Zulauf und eine am Ablauf der Baugruppe.

In einer Ausführungsform der Baugruppe ist das Medium ein Kältemittel, vorzugsweise R290. R290 umfasst Propan und hat den Vorteil, dass es bei Umgebungstemperatur und -druck in einem gasförmigen Zustand befindet. Darüber hinaus ist R290 ein umweltfreundliches Kältemittel und darüber hinaus ein sehr energieeffizientes Kältemittel. Das Kältemittel kann auch flüssig oder ein Gas sein.

In einer Ausführungsform der Baugruppe ist das Gehäuse zumindest teilweise aus Kupfer gebildet. Kupfer weist eine gute Formbarkeit auf und kann deshalb leicht verarbeitet werden, wodurch fertigungstechnische Vorteile entstehen. Darüber hinaus leitet Kupfer Wärme gut und kann somit teilweise als Kühlkörper dienen. In anderen Ausführungen kann das Gehäuse teilweise oder vollständig aus Edelstahl bestehen, wodurch Kostenvorteile erreichbar sind.

Erfindungsgemäß wird nach einem zweiten Aspekt ein System vorgeschlagen, umfassend eine erfindungsgemäße Baugruppe, ein Umschaltventil mit einer Umschalteinrichtung, wobei das Umschaltventil mindestens einen ersten Anschluss, mindestens einen zweiten Anschluss, mindestens einen dritten Anschluss und mindestens einen vierten Anschluss umfasst, wobei der zweite Anschluss des Umschaltventils dafür eingerichtet ist, mit einer Verbindungsleitung verbunden zu werden, wobei der dritte Anschluss des Umschaltventils dafür eingerichtet ist, mit einer Verbindungsleitung verbunden zu werden, wobei der vierte Anschluss des Umschaltventils dafür eingerichtet ist, mit einer Verbindungsleitung verbunden zu werden, wobei die Umschalteinrichtung dafür eingerichtet ist, in einer ersten Stellung einen Fluss zwischen erstem und zweitem Ein-Anschluss und zwischen dritten und vierten Anschluss freizugeben und in einer zweiten Stellung einen Fluss zwischen erstem und dritten Anschluss und zwischen zweitem und vierten Anschluss freizugeben.

Die Kombination aus Baugruppe und Umschaltventil ermöglicht die Bereitstellung einer einheitlichen funktionalen Einheit bestehend aus Einwegventil mit Umschaltventil, welches kompakt ausgebildet ist und leicht tauschbar ist. Somit wird die Wartbarkeit weiter erhöht. Das Umschaltventil ist vorzugsweise ein 4/2 Wege Umschaltventil.

In einer Ausführungsform des Systems sind ein Niederdrucksensor und ein Niederdruckfüllventil weiter umfasst, wobei der Niederdrucksensor und das Niederdruckfüllventil mit dem ersten Ausgang oder dem zweiten Ausgang verbunden sind. Ein Vorteil des Vorsehens von Niederdrucksensor und Niederdruckfüllventil ist, dass somit auf der Niederdruckseite, welche die Komponenten betrifft, welche in Flussrichtung nach dem Einwegventil gelegen sind, Mess- und Steuerinstrumente vorgesehen sind, um den Fluss weiter zu regulieren.

In einer Ausführungsform des Systems ist eine Steuereinheit umfasst, wobei der Niederdrucksensor und das Niederdruckfüllventil mit dem ersten Ausgang oder dem zweiten Ausgang über die Steuereinheit verbunden sind, wobei die Umschalteinrichtung mit der Steuereinheit verbunden ist und von dieser angesteuert wird, wobei der Hochdrucksensor und/oder der Hochdruckschalter und/oder das Füllventil mit der Baugruppe über die Steuereinheit verbunden sind. Vorteilhafterweise bündelt die Steuereinheit die Drucksensoren, die Ventile und den Hochdruckschalter an einem einzigen Ort. Darüber hinaus kann die Steuereinheit vorteilhafterweise die Umschalteinrichtung ansteuern. Weiter ist die Steuereinheit vorteilhafterweise programmierbar, sodass die Umschalteinrichtung über die Steuereinheit mithilfe von Programmen gesteuert werden kann. Die Programme können vorteilhafterweise Messwerte der Drucksensoren für die Steuerung berücksichtigen.

In einer Ausführungsform des Systems ist die erste Verbindungsleitung gebogen, sodass das Umschaltventil benachbart zu dem Gehäuse der Baugruppe angeordnet ist. Die erste Verbindungsleitung kann rund gebogen oder auch eckig gebogen sein. Dies hat den Vorteil, dass das Umschaltventil unmittelbar neben dem Gehäuse der Baugruppe angeordnet ist. Somit kann das System kompakt gehalten werden. Vorteilhafterweise ist das Umschaltventil unmittelbar benachbart zu dem Gehäuse der Baugruppe angeordnet.

Erfindungsgemäß wird nach einem dritten Aspekt ein Schwingungsdämpfer vorgeschlagen, für eine Baugruppe nach einem Aspekt der Erfindung, wobei der Schwingungsdämpfer benachbarte Aufnahmen umfasst, wobei eine erste Aufnahme dafür eingerichtet ist, das Gehäuse der Baugruppe aufzunehmen, und mindestens eine weitere Aufnahme dafür eingerichtet ist, eine weitere Komponente der Baugruppe aufzunehmen. Der Schwingungsdämpfer hat den Vorteil, dass die Komponenten der Baugruppe und die Baugruppe relativ zueinander stabil gehalten werden. So werden Beschädigungen durch auftretende starke Schwingungen vermieden, da der Schwingungsdämpfer wie ein Abstandshalter fungiert. Darüber hinaus dämpft der Schwingungsdämpfer die Schwingungen an der Baugruppe.

In einer Ausführungsform des Schwingungsdämpfers umfasst dieser eine zweite und eine dritte Aufnahme, wobei die zweite Aufnahme den mindestens einen Hochdrucksensor der Baugruppe aufnimmt und die dritte Aufnahme den mindestens einen Hochdruckschalter der Baugruppe aufnimmt, wobei alle Aufnahmen bevorzugt zumindest teilweise als gerundete Einkerbungen ausgebildet sind. Durch die gerundeten Einkerbungen sind die Komponenten der Baugruppe gut aufnehmbar und werden auch derart von der Aufnahme in Umfangsrichtung umschlossen, sodass die Wahrscheinlichkeit für Beschädigungen, beispielsweise durch Anstoßen, verringert werden.

In einer Ausführungsform des Schwingungsdämpfers ist der Schwingungsdämpfer zumindest teilweise aus einem Gummi-Material gebildet ist. Wenn der Schwingungsdämpfer vorteilhafterweise aus einem Gummi-Material gefertigt ist, ist er zu einem gewissen Grad elastisch um Schwingungen aufzunehmen und trotzdem noch hinreichend starr, um die Komponenten in Position zu halten. Vorzugsweise ist der Schwingungsdämpfer aus Hartgummi gefertigt.

Ein weiterer Aspekt der Erfindung ist ein System, das eine Baugruppe nach einem Aspekt der Erfindung und einen Schwingungsdämpfer nach einem weiteren Aspekt der Erfindung umfasst, wobei der Schwingungsdämpfer die Baugruppe aufnimmt.

Merkmale vorteilhafter Ausführungsformen der Erfindung sind insbesondere in den Unteransprüchen definiert, wobei weitere vorteilhafte Merkmale, Ausführungen und Ausgestaltungen für den Fachmann zudem aus der obigen Erläuterung und der folgenden Diskussion zu entnehmen sind.

Im Folgenden wird die vorliegende Erfindung anhand von in den Figuren dargestellten Ausführungsbeispielen weiter illustriert und erläutert. Hierbei zeigt
- Fig. 1a: eine schematische Darstellung eines ersten Ausführungsbeispiels der erfindungsgemäßen Baugruppe,
- Fig. 1b: eine Schnittdarstellung der erfindungsgemäßen Baugruppe aus Fig. 1a,
- Fig. 1c: eine Draufsicht der erfindungsgemäßen Baugruppe aus Fig. 1a,
- Fig. 2a: eine schematische Seitenansicht eines Umschaltventils,
- Fig. 2b: eine schematische Rückansicht eines Umschaltventils,
- Fig. 3a: eine schematische Darstellung eines erfindungsgemäßen Systems umfassend eine Baugruppe, die mit einem Umschaltventil verbunden ist,
- Fig. 3b: eine schematische Vorderansicht des erfindungsgemäßen Systems aus Fig. 3a,
- Fig. 3c: eine schematische Draufsicht des erfindungsgemäßen Systems aus Fig. 3a,
- Fig. 3d: eine schematische Draufsicht eines erfindungsgemäßen Systems, das eine alternative Baugruppe umfasst,
- Fig. 4a: eine schematische Seitenansicht eines Systems bestehend aus einer erfindungsgemäßen Baugruppe und einem erfindungsgemäßen Schwingungsdämpfer,
- Fig. 4b: eine schematische Vorderansicht eines Systems bestehend aus einer erfindungsgemäßen Baugruppe und einem erfindungsgemäßen Schwingungsdämpfer,
- Fig. 4c: eine schematische Seitenansicht eines Systems bestehend aus einer erfindungsgemäßen Baugruppe und einem erfindungsgemäßen Schwingungsdämpfer,
- Fig. 4d: eine schematische Draufsicht eines Systems bestehend aus einer erfindungsgemäßen Baugruppe und einem erfindungsgemäßen Schwingungsdämpfer,
- Fig. 5a: eine schematische Zeichnung eines erfindungsgemäßen Systems bestehend aus einer Baugruppe und einem Umschaltventil,
- Fig. 5b: eine schematische Zeichnung eines weiteren erfindungsgemäßen Systems bestehend aus einer Baugruppe und einem Umschaltventil,
- Fig. 5c: eine schematische Zeichnung eines weiteren erfindungsgemäßen Systems bestehend aus einer Baugruppe, einem Umschaltventil und einer Steuereinheit.

In den beiliegenden Zeichnungen sowie den Erläuterungen zu diesen Zeichnungen sind einander entsprechende bzw. in Beziehung stehende Elemente - soweit zweckdienlich - mit jeweils entsprechenden oder ähnlichen Bezugszeichen gekennzeichnet, auch wenn sie in unterschiedlichen Ausführungsbeispielen zu finden sind.

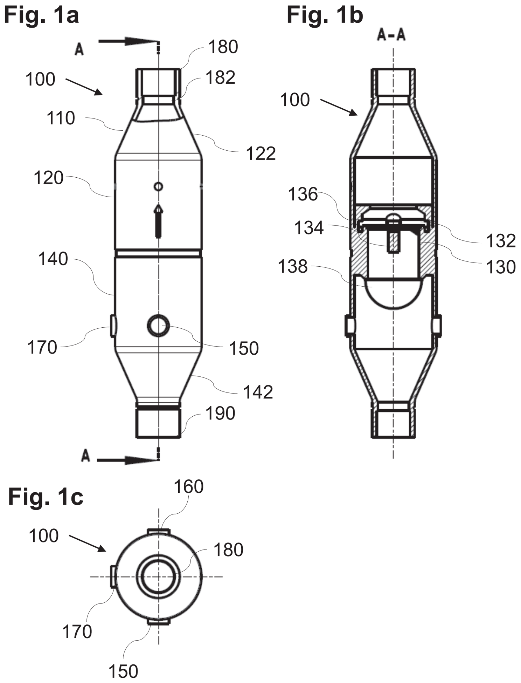

Fig. 1a zeigt eine schematische Darstellung einer ersten Ausführungsform der erfindungsgemäßen Baugruppe 100. Die dargestellte Baugruppe 100 umfasst ein Gehäuse 110 mit einem primären Bereich 120 und einem sekundären Bereich 140. Das Gehäuse 110 umfasst weiter einen Zulauf 190 und einen Ablauf 180. In einigen Ausführungsformen umfasst das Gehäuse 110 mehrere Zuläufe 190 und/oder mehrere Abläufe 180. Das Gehäuse 110 ist vorzugsweise als länglicher Zylinder mit einem erstem Durchmesser d1 ausgestaltet. Zulauf 190 und Ablauf 180 des Gehäuses 110 können vorzugsweise einen zweiten Durchmesser d2 aufweisen, der kleiner als der erste Durchmesser d1 ist. Wie dargestellt kann das Gehäuse 110 konische Bereiche 122, 142 umfassen, um Abschnitte des Gehäuses 110 mit dem ersten Durchmesser d1 mit dem Zulauf 190 und dem Ablauf 180 des Gehäuses 110 mit dem zweiten Durchmesser d2 zu verbinden. Zulauf 190 und/oder Ablauf 180 können jeweils eine Einstecktiefenbegrenzung 182 umfassen.

Der primäre Bereich 120 erstreckt sich vorzugswiese von einer Mitte des Gehäuses 110 in Längsrichtung in eine erste Richtung hin zu dem Ablauf 180. Der sekundäre Bereich 140 erstreckt sich vorzugsweise von der Mitte des Gehäuses 110 in Längsrichtung in die entgegengesetzte Richtung zu dem Zulauf 190 hin. Am sekundären Bereich 140 sind Anschlüsse 150, 160, 170 vorgesehen um mindestens einen Hochdrucksensor 152, mindestens einen Hochdruckschalter 162 und mindestens ein Füllventil 172 anzuschließen. Das mindestens eine Füllventil 172 ist vorzugsweise dafür eingerichtet, mit einer ersten Verbindungsleitung 174 (nicht dargestellt) verbunden zu werden.

Fig. 1b zeigt eine Schnittdarstellung der erfindungsgemäßen Baugruppe aus Fig. 1a entlang der eingezeichneten Schnittlinie A-A. Innerhalb des Gehäuses 110 der Baugruppe 100 kann mindestens ein Einwegventil 130 angeordnet sein. Das Einwegventil 130 kann eine Ventilplatte 132 umfassen. Weiter kann das Einwegventil 130 einen Magneten 134 umfassen, um die Ventilplatte 132 in Richtung einer Hubbegrenzung 136 zu drücken. Somit kann ein Medium in einer ersten Richtung beispielsweise vom sekundären Bereich 140 zum primären Bereich 120 unter Überwindung einer Mindestdruckdifferenz fließen. Gleichzeitig wird der Rückfluss des Mediums vom primären Bereich 120 zum sekundären Bereich 140 durch das Einwegventil 130 verhindert. Bei einem Rückfluss des Mediums wird die Ventilplatte 132 in Richtung der Hubbegrenzung 136 gedrückt und verschließt somit jeglichen Durchgang. Folglich lässt das Einwegventil 130 ein Medium nur in mindestens einer Flussrichtung hindurch. Zusätzlich weist die Baugruppe einen Sieb 138 innerhalb des Gehäuses 110 auf. Der Sieb 138 ist vorzugsweise innerhalb des sekundären Bereichs 140 des Gehäuses 110 angeordnet und filtert Festkörper aus dem Medium. Somit wird ein Verstopfen des Einwegventils 130 verhindert.

Fig. 1c zeigt eine Draufsicht der erfindungsgemäßen Baugruppe aus Fig. 1a. An den Außenseiten des Gehäuses sind ein Anschluss 150 für einen Hochdrucksensor 152, ein Anschluss 160 für einen Hochdruckschalter 162 und ein Anschluss 170 für ein Füllventil 172 dargestellt, an denen jeweils mindestens ein Hochdrucksensor 152, mindestens ein Hochdruckschalter 162 und mindestens ein Füllventil 172 anschließbar sind. In Fig. 1c sind die Anschlüsse um das Gehäuse 110 der Baugruppe 100 in 90° Abständen herum angeordnet. Jedoch sind auch weitere Abstände möglich, in denen die Anschlüsse um das Gehäuse 110 der Baugruppe 100 herum angeordnet werden können. So können die Anschlüsse auch in Abständen von 100° bis 140°, vorzugsweise 110° bis 130° und weiter vorzugsweise 115° bis 125° um das Gehäuse 110 der Baugruppe 100 herum angeordnet sein. Insbesondere können die Anschlüsse in einem Abstand von 120° um das Gehäuse herum angeordnet sein. Weiter wird der Ablauf 180 von oben dargestellt.

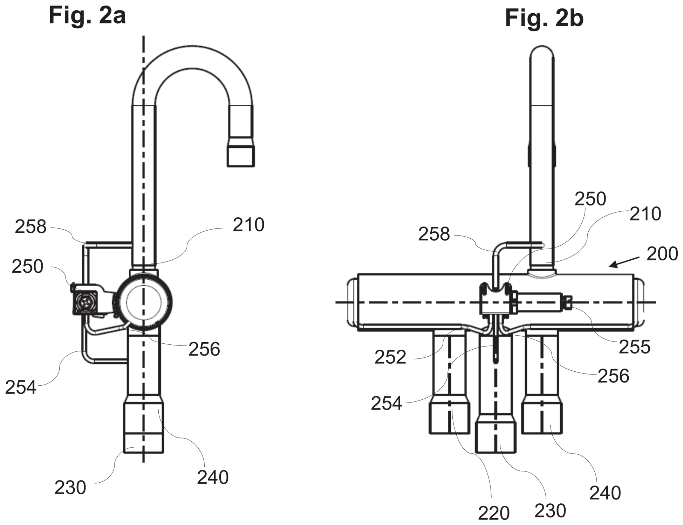

Die Figs. 2a und 2b zeigen jeweils eine Seitenansicht und eine Rückansicht eines Umschaltventils 200. In Fig. 2b sind weitere Anschlüsse 220, 230, 240 für Verbindungsleitungen an dem Umschaltventil 200 dargestellt. Vorzugsweise umfasst das Umschaltventil zvier Anschlüsse 210, 220, 230, 240. An den je nach Schaltzustand des Umschaltventils 200 als Eingänge und Ausgänge wirkenden Anschlüssen 210, 220, 230, 240 sind jeweils Verbindungsleitungen anschließbar. Darüber hinaus weist das Umschaltventil 200 eine Umschalteinrichtung 250 auf. Mithilfe der Umschalteinrichtung 250 kann zwischen den Eingängen und Ausgängen 210, 220, 230, 240 umgeschaltet werden. Die Umschalteinrichtung 250 ist elektrisch, über Funk oder anderweitig ansteuerbar und/oder die Umschalteinrichtung kann per Hand über einen Umschaltknopf 252 betätigt werden, um Umschaltungen vorzunehmen. Die Umschalteinrichtung 250 umfasst mehrere Steuerleitungen 252, 254, 256, 258 mit denen die einzelnen Anschlüsse 210, 220, 230, 240 jeweils einzeln angesteuert werden können. Somit wird der Umschalteinrichtung 250 ermöglicht, die Flusswege zwischen den Anschlüssen 210, 220, 230, 240 anzupassen. In einer Ausführung ist das Umschaltventil 200 vereinfacht als ein 4/2-Wege-Ventil ausgeführt, das zwei Schaltzustände aufweist, in dem jeweils zwei unterschiedliche Ein- bzw. Ausgänge des Umschaltventils 200 miteinander verbunden sind, und einen Fluidstrom zwischen den Ein- bzw. Ausgängen freigibt.

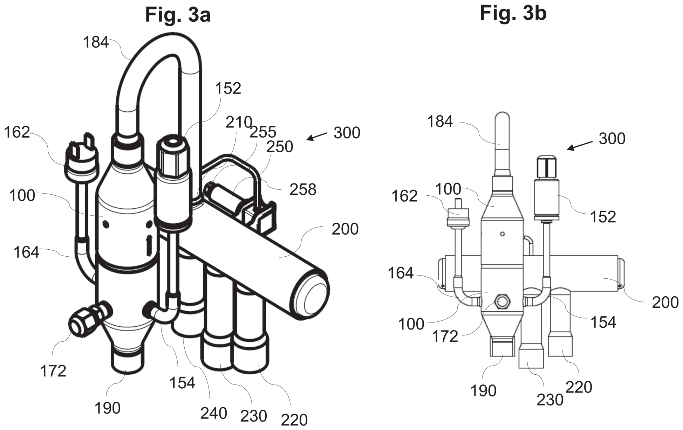

Figs. 3a bis 3d zeigen verschiedene Ansichten eines erfindungsgemäßen Systems 300 bestehend aus einer erfindungsgemäßen Baugruppe 100 und einem Umschaltventil 200. Fig. 3a zeigt eine perspektivische Ansicht des erfindungsgemäßen Systems 300 bestehend aus der erfindungsgemäßen Baugruppe 100 aus Figs. 1a bis 1c, die an das Umschaltventil 200 aus Figs. 2a und 2b über eine erste Verbindungsleitung 184 angeschlossen ist. Die erste Verbindungsleitung 184 ist, vorzugsweise mit einem Radius von 20 mm bis 50 mm, vorzugsweise 25 mm bis 40 mm und besonders vorzugsweise 28 mm bis 32 mm, derart gebogen, sodass das Umschaltventil 200 in nächster Nähe zu der Baugruppe 100 angeordnet ist. In einigen Ausführungsformen ist der Radius 30 mm. Durch diese nahe bis unmittelbare räumliche Anordnung von Baugruppe 100 und Umschaltventil 200 kann das System 300 kompakt gehalten werden, wodurch wenig Platz verbraucht wird. Weiter sind in Fig. 3a ein Füllventil 172, ein Hochdrucksensor 152 und ein Hochdruckschalter 162 an der Baugruppe 100 angeschlossen dargestellt. Dabei sind der Hochdrucksensor 152 und der Hochdruckschalter 162 jeweils über Leitungen 154, 164 an der Baugruppe 100 angeschlossen. Vorteilhafterweise sind die Leitungen 154, 164 gewinkelt ausgestaltet, wodurch die Baugruppe 100 kompakt gehalten werden kann. Dabei erstrecken die Leitungen 154, 164 sich erst radial weg von dem Gehäuse 110 der Baugruppe 100 und dann parallel zu dem Gehäuse 110 der Baugruppe 100.

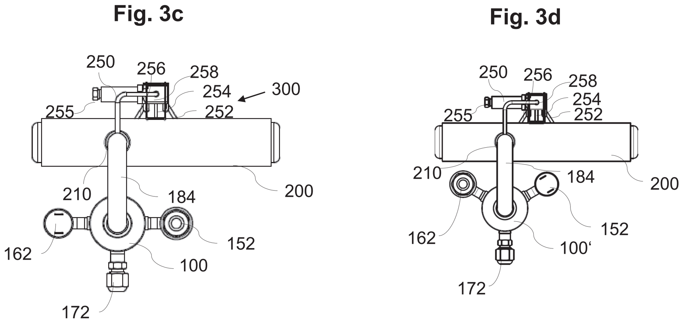

Fig. 3b zeigt eine Vorderansicht des erfindungsgemäßen Systems 300 umfassend die Baugruppe 100, welche an ein Umschaltventil 200 angeschlossen ist, wie in der Perspektivansicht in Fig. 3a dargestellt. Fig. 3c zeigt eine Draufsicht des erfindungsgemäßen Systems 300, wie in der Perspektivansicht in Fig. 3a dargestellt. Dabei ist die Baugruppe 100 vor dem Umschaltventil 200 angeordnet und die Baugruppe 100 und das Umschaltventil 200 sind über die erste Verbindungsleitung 184 miteinander verbunden. In Fig. 3c ist das System 300 von oben dargestellt. An der Baugruppe 100 sind ein Hochdrucksensor 152, ein Füllventil 172 und ein Hochdruckschalter 162 in Abständen von ca. 90° zueinander dargestellt. Ein System 300 umfassend eine alternative Baugruppe 100' ist in Fig. 3d dargestellt. Im Unterschied zur in Fig. 3c dargestellten Baugruppe 100 sind in Fig. 3d der Hochdrucksensor 152, das Füllventil 172 und der Hochdruckschalter 162 in Abständen von 120° zueinander angeordnet.

Weiter ist in Figs. 3c und 3d die Umschalteinrichtung 250 von oben dargestellt. Die Umschalteinrichtung 250 ist in dieser Perspektive hinter dem Umschaltventil 200 angeordnet. Die Umschalteinrichtung 250 kann eine Schraube 255 umfassen, die zur Befestigung einer in Fig. 3c nicht gezeigten Betätigungsspule dient. Das Umschaltventil 250 ist aber auch ansteuerbar. Beispielsweise verfügt das Umschaltventil 250 über mehrere Anschlüsse 210, 220, 230 und 240 und ermöglicht die Verbindung von zwei Anschlüssen miteinander. Durch Umschalten des Umschaltventils 250 kann somit eine Verbindung zwischen je zwei verschiedenen der Anschlüsse 210, 220, 230 und 240 hergestellt werden.

Bevorzugt ist das Umschaltventil 250 als 4/2-Wege-Ventil ausgeführt, so dass genau zwischen zwei Betriebspositionen mit einer Verbindung in einer ersten Betriebsposition zwischen Anschluss 210 und Anschluss 240 bzw. in einer zweiten Betriebsposition zwischen Anschluss 210 und Anschluss 220 möglich ist. Entsprechend ist in der ersten Betriebsposition Anschluss 220 mit Anschluss 230 verbunden und in der zweiten Betriebsposition Anschluss 230 mit Anschluss 240 verbunden.

Für die Umschaltung sind an der Umschalteinrichtung 250 mehrere Steuerleitungen 252, 254, 256, 258 angeschlossen. Die Steuerleitungen 252, 254, 256, 258 schalten die Position eines Schiebers (rechts oder links).

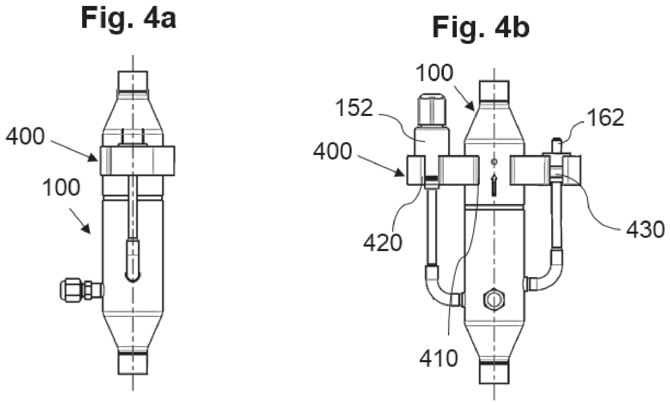

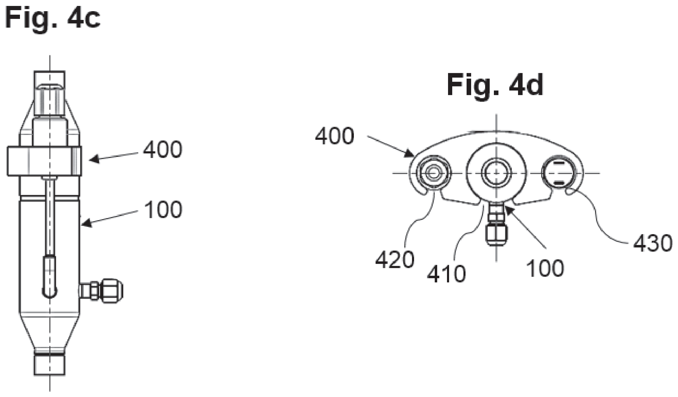

In Figs. 4a bis 4d ist ein System bestehend aus einer Baugruppe 100 gemäß Figs. 1 a bis 1c und einem erfindungsgemäßen Schwingungsdämpfer 400 dargestellt. Dabei stellen Figs. 4a und 4c eine schematische Seitenansicht des Systems dar, während Fig. 4b eine schematische Vorderansicht des Systems zeigt und Fig. 4d eine schematische Draufsicht des Systems zeigt. Der Schwingungsdämpfer 400 ist vorzugsweise scheibenartig mit einem gewissen Mindestdurchmesser ausgestaltet und weist weiter vorzugsweise mehrere Aufnahmen 410, 420, 430 auf, um Komponenten der Baugruppe 100 aufzunehmen. Besonders bevorzugt wird der Schwingungsdämpfer 400 als Extrusionsprofil gefertigt und auf eine Länge von 10 bis 20 mm abgelängt. So kann beispielsweise die Aufnahme 410 derart ausgestaltet sein, dass das Gehäuse 110 der Baugruppe 100 darin aufgenommen werden kann. Weiter können die Aufnahmen 420, 430 so ausgestaltet sein, dass Komponenten der Baugruppe, wie beispielsweise ein Hochdruckschalter 162 in Aufnahme 420 und/oder ein Hochdrucksensor 152 in Aufnahme 430 aufnehmbar sind. Vorzugsweise umschließen die Aufnahmen 410, 420, 430 die aufgenommen Komponenten zumindest teilweise, um sie vor Beschädigungen zu schützen und ihnen einen sicheren Halt zu geben.

Weiter ist der Schwingungsdämpfer 400 vorzugsweise aus einem elastischen Material, beispielsweise Hartgummi, gebildet. Der Schwingungsdämpfer 400 kann etwaige Schwingungen der Baugruppe 100 dämpfen. Gleichzeitig dient der Schwingungsdämpfer 400 als Abstandshalter zwischen den Komponenten der Baugruppe 100. Durch das Abstandhalten können die Komponenten sich nicht gegenseitig beschädigen, sollten starke Schwingungen auftreten. Die Aufnahmen 410, 420, 430 des Schwingungsdämpfers 400 können vorzugsweise als offene Kreise, offene Halbkreise, offene Dreiviertelkreise oder ähnlich ausgestaltet sein. Andere Formen, beispielsweise eckige, elliptische oder komplexe Formen zur Aufnahme der Komponenten sind ebenfalls möglich und stellen bevorzugte Ausführungsformen dar.

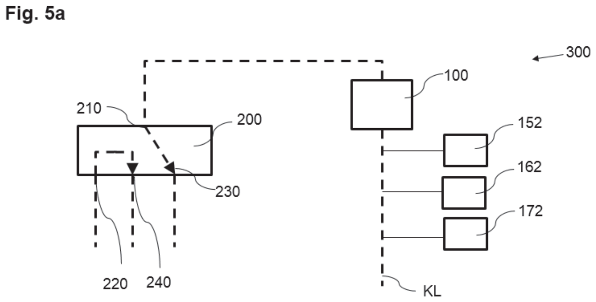

In Fig. 5a ist eine Schaltzeichnung eines Systems 300 bestehend aus einer Baugruppe 100 und einem Umschaltventil 200 dargestellt. Die gestrichelten Linien stellen einen Teil des Kreislaufs KL dar. Der Kreislauf ist bevorzugt ein Kältekreislauf. Ein Hochdrucksensor 152, ein Hochdruckschalter 162 und ein Füllventil 172 sind mit dem Kreislauf verbunden. Das Medium im Kreislauf KL bewegt sich von der Baugruppe 100 in Richtung des Umschaltventils 200, wo das Medium durch den ersten Eingang 210 in das Umschaltventil eintritt. Ein weiterer Teil des Kreislaufs KL oder ein anderer Kreislauf KL' tritt über den zweiten Eingang 220 in das Umschaltventil 200 ein und über den zweiten Ausgang 240 wieder aus. In Fig. 5a ist gezeigt, dass der erste Eingang 210 mit dem ersten Ausgang 230 des Umschaltventils 200 verbunden ist. Gleichwohl ist der zweite Eingang 220 mit dem zweiten Ausgang 240 des Umschaltventils 200 verbunden.

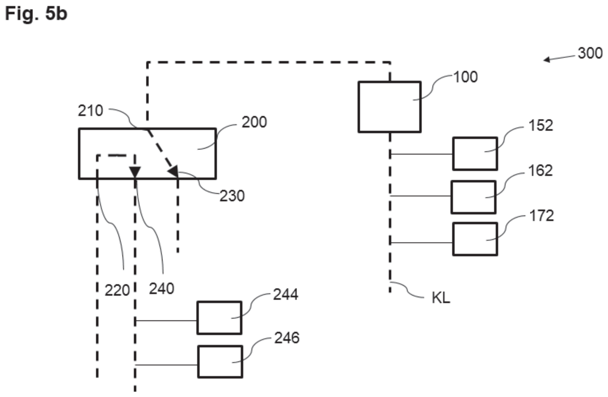

Fig. 5b zeigt eine weitere Ausführungsform des Systems 300 aus Fig. 5a. Zusätzlich zum System 300 aus Fig. 5a sind ein Niederdrucksensor 244 und ein Niederdruckfüllventil 246 mit dem zweiten Ausgang 240 verbunden. Der Niederdrucksensor 244 und das Niederdruckfüllventil 246 können auch alternativ mit dem ersten Ausgang 230 verbunden sein. Der Niederdrucksensor 244 und das Niederruckfüllventil 246 sind vorzugsweise an eine Verbindungsleitung angeschlossen, die mit dem ersten Ausgang 230 oder dem zweiten Ausgang 240 verbunden ist.

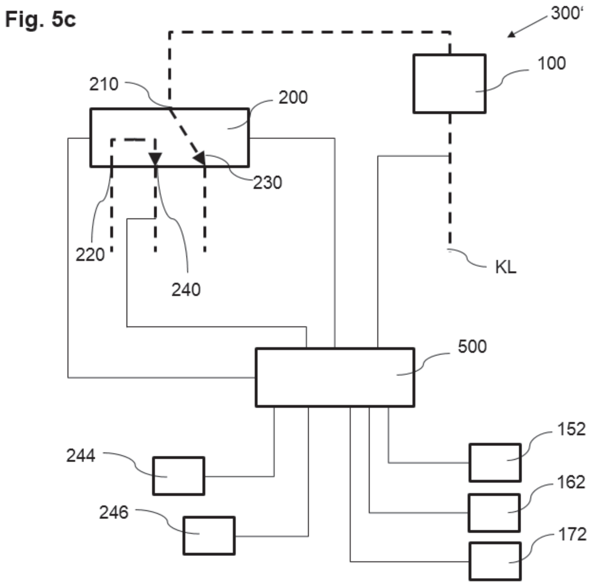

Fig. 5c zeigt eine weitere Ausführungsform eines Systems 300' umfassend einen Kreislauf KL, eine Baugruppe 100 und ein Umschaltventil 200 mit einem ersten Eingang 210, einem zweiten Eingang 220, einem ersten Ausgang 230 und einem zweiten Ausgang 240. Weiter umfasst das System 300' eine Steuereinheit 500. Die Steuereinheit 500 ist mit dem Kreislauf KL auf der Hochdruckseite verbunden. Außerdem ist die Steuereinheit 500 mit dem Umschaltventil 200 verbunden. Die Steuereinheit 500 kann mit der Umschalteinrichtung 250 des Umschaltventils 200 verbunden sein, um dieses zu steuern. An der gezeigten Steuereinheit 500 sind der Hochdrucksensor 152, der Hochdruckschalter 162, das Füllventil 172, der Niederdrucksensor 244 und das Niederdruckfüllventil 246 angeschlossen. Hierdurch bündelt die Steuereinheit 500 die genannten Mess- und Steuerinstrumente an einem Ort, wodurch der Aufbau des Systems 300' einfacher ist.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden. Dies gilt insbesondere für die Baugruppen, die Steuereinheit, die Drucksensoren, Füllventil und Füllventil und den Hochdruckschalter.

### Bezugszeichenliste

- 100: Baugruppe
- 100': Baugruppe
- 110: Gehäuse
- 120: Primärer Bereich
- 122: konischer Bereich
- 130: Einwegventil
- 132: Ventilplatte
- 134: Magnet
- 136: Hubbegrenzung
- 138: Sieb
- 140: Sekundärer Bereich
- 142: konischer Bereich
- 150: Anschluss für Hochdrucksensor
- 152: Hochdrucksensor
- 154: Leitung
- 160: Anschluss für Hochdruckschalter
- 162: Hochdruckschalter
- 164: Leitung
- 170: Anschluss für Füllventil
- 172: Füllventil
- 174: zweite Verbindungsleitung
- 180: Ablauf
- 182: Einstecktiefenbegrenzung
- 184: erste Verbindungsleitung
- 190: Zulauf
- 200: Umschaltventil
- 210: erster Eingang
- 220: zweiter Eingang
- 230: erster Ausgang
- 240: zweiter Ausgang
- 244: Niederdrucksensor
- 246: Niederdruckfüllventil
- 250: Umschalteinrichtung
- 252: erste Steuerleitung
- 254: zweite Steuerleitung
- 255: Umschaltknopf
- 256: dritte Steuerleitung
- 258: vierte Steuerleitung
- 300: System
- 300': System
- 400: Schwingungsdämpfer
- 410: erste Aufnahme
- 420: zweite Aufnahme
- 430: dritte Aufnahme
- 500: Steuereinheit

## Patentansprüche

1. Baugruppe (100, 100') für einen Kreislauf (KL) mit einem gasförmigen oder flüssigen Medium, vorzugsweise zur Verwendung in einer Wärmepumpe, wobei die Baugruppe (100, 100') dafür eingerichtet ist, mehrere zueinander benachbarte Komponenten zu umfassen, wobei die Baugruppe (100, 100') umfasst:
ein Gehäuse (110) mit mindestens einem Ablauf (180) und mindestens einem Zulauf (190), wobei das Gehäuse (110) mindestens einen auf dem Gehäuse (110) angeordneten Anschluss (150, 160, 170) umfasst,
wobei die Baugruppe (100, 100') mit einem Hochdrucksensor (152) und/oder einem Hochdruckschalter (162) und/oder einem Füllventil (172) über jeweils einen Anschluss (150, 160, 170) verbindbar ist.

2. Baugruppe (100, 100') nach Anspruch 1, wobei die Baugruppe (100, 100') mindestens ein Einwegventil (130) umfasst, das innerhalb des Gehäuses (110) angeordnet ist,
wobei das mindestens eine Einwegventil (130) eine Durchgangsrichtung für das Medium in einer Richtung, zu dem mindestens einen Ablauf (180) hin, und eine Sperrrichtung für das Medium in der entgegengesetzten Richtung, zu dem mindestens einen Zulauf (190) hin, umfasst.

3. Baugruppe (100, 100') nach Anspruch 2, wobei das Gehäuse (110) einen primären Bereich (120) und einen sekundären Bereich (140) umfasst, wobei der primäre Bereich (120) sich von einer Mitte des Gehäuses (110) in eine erste Richtung erstreckt und wobei der sekundäre Bereich (140) sich von der Mitte des Gehäuses (110) in eine zweite Richtung erstreckt, wobei der sekundäre Bereich (120) des Gehäuses (110) mit einem Hochdrucksensor (152), einem Hochdruckschalter (162) und einem Füllventil (172) verbunden ist.

4. Baugruppe (100, 100') nach Anspruch 3, wobei der Hochdrucksensor (152) zu dem Füllventil (172) mit einem Winkelabstand alpha beabstandet ist und der Hochdruckschalter (162) von dem Füllventil mit dem Winkelabstand alpha beabstandet ist, wobei der Winkelabstand alpha 90° oder 120° ist.

5. Baugruppe (100, 100') nach einem der Ansprüche 2 bis 4, wobei das mindestens eine Einwegventil (130) eine Ventilplatte (132), eine Hubbegrenzung (136) und einen Magneten (134) umfasst, wobei der Magnet (134) an der Ventilplatte (132) des mindestens einen Einwegventils (130) angeordnet ist und die Ventilplatte (132) in Richtung der Hubbegrenzung (136) drückt, sodass das Einwegventil (130) geschlossen ist, wenn die Ventilplatte (132) gegen die Hubbegrenzung (136) gedrückt ist, und wobei das Einwegventil (130) geöffnet ist, wenn die Ventilplatte (132) nicht gegen die Hubbegrenzung (136) gedrückt ist.

6. Baugruppe (100, 100') nach einem der Ansprüche 2 bis 5, wobei das mindestens eine Einwegventil (130) einen Sieb (138) umfasst, welches innerhalb des mindestens einen Einwegventils (130) angeordnet ist.

7. Baugruppe (100, 100') nach einem der Ansprüche 2 bis 6, wobei das mindestens eine Einwegventil (130) mindestens eine Einstecktiefenbegrenzung (182) umfasst.

8. Baugruppe (100, 100') nach einem der Ansprüche 2 bis 7, wobei das Medium ein Kältemittel, vorzugsweise R290, ist.

9. Baugruppe (100, 100') nach einem der Ansprüche 1 bis 8, wobei das Gehäuse (110) zumindest teilweise aus Kupfer gebildet ist.

10. System (300), umfassend die Baugruppe (100, 100') nach einem der Ansprüche 1 bis 9, weiter umfassend ein Umschaltventil (200) mit einer Umschalteinrichtung (250),
wobei das Umschaltventil (200) mindestens einen ersten Anschluss (210), mindestens einen zweiten Anschluss (220), mindestens einen dritten Anschluss (230) und mindestens einen vierten Anschluss (240) umfasst,
wobei mindestens ein Ablauf (180) der Baugruppe (100, 100') über eine erste Verbindungsleitung (184) mit einem ersten Anschluss (210) des Umschaltventils (200) verbunden ist,
wobei der zweite Anschluss (220) des Umschaltventils (200) dafür eingerichtet ist, mit einer Verbindungsleitung verbunden zu werden, wobei der dritte Anschluss (230) des Umschaltventils (200) dafür eingerichtet ist, mit einer Verbindungsleitung verbunden zu werden, wobei der vierte Anschluss (240) des Umschaltventils dafür eingerichtet ist, mit einer Verbindungsleitung verbunden zu werden,
wobei die Umschalteinrichtung (250) als 4/2-Wege-Ventil ausgebildet und dafür eingerichtet ist, in einer ersten Stellung einen Fluss zwischen erstem und zweitem Anschluss (210, 220) und zwischen dritten und vierten Anschluss (230, 240) freizugeben und in einer zweiten Stellung einen Fluss zwischen erstem und dritten Anschluss (210, 230) und zwischen zweitem und vierten Anschluss (220, 240) freizugeben.

11. System (300) nach Anspruch 10, weiter umfassend einen Niederdrucksensor (244) und ein Niederdruckfüllventil (246), wobei der Niederdrucksensor (244) und das Niederdruckfüllventil (246) mit dem ersten Ausgang (230) oder dem zweiten Ausgang (240) verbunden sind.

12. System (300) nach Anspruch 11, weiter umfassend eine Steuereinheit (500)
wobei der Niederdrucksensor (244) und das Niederdruckfüllventil (246) mit dem ersten Ausgang (230) oder dem zweiten Ausgang (240) über die Steuereinheit (500) verbunden sind,
wobei die Umschalteinrichtung (250) mit der Steuereinheit (500) verbunden ist und von dieser angesteuert wird,
wobei der Hochdrucksensor (152) und/oder der Hochdruckschalter (162) und/oder das Einlaufventil (172) mit der Baugruppe (100, 100') über die Steuereinheit (500) verbunden sind.

13. System (300) nach einem der Ansprüche 10 bis 12, wobei die erste Verbindungsleitung (184) gebogen ist, sodass das Umschaltventil (200) benachbart zu dem Gehäuse (110) der Baugruppe (100, 100') angeordnet ist.

14. Schwingungsdämpfer (400) für eine Baugruppe (100, 100') nach einem der Ansprüche 1 bis 9, wobei der Schwingungsdämpfer benachbarte Aufnahmen (410, 420, 430) umfasst, wobei eine erste Aufnahme (410) dafür eingerichtet ist, das Gehäuse (110) der Baugruppe (100, 100') nach einem der Ansprüche 1 bis 9 aufzunehmen, und mindestens eine weitere Aufnahme (420, 430) dafür eingerichtet ist, eine weitere Komponente der Baugruppe (100, 100') nach einem der Ansprüche 1 bis 9 aufzunehmen.

15. Schwingungsdämpfer (400) nach Anspruch 14, weiter umfassend eine zweite und eine dritte Aufnahme (420), wobei die zweite Aufnahme (430) den mindestens einen Hochdrucksensor (152) der Baugruppe (100, 100') aufnimmt und die dritte Aufnahme (430) den mindestens einen Hochdruckschalter (162) der Baugruppe (100, 100') aufnimmt, wobei alle Aufnahmen (410, 420, 430) bevorzugt zumindest teilweise als gerundete Einkerbungen ausgebildet sind.

16. System, umfassend eine Baugruppe (100, 100') nach einem der Ansprüche 1 bis 9 und einen Schwingungsdämpfer (400) nach einem der Ansprüche 14 oder 15, wobei der Schwingungsdämpfer (400) die Baugruppe (100, 100') aufnimmt.
